# EUROPEAN PATENT APPLICATION

(11) **EP 2 011 405 A1**
(43) Date of publication of application: **07.01.2009**
(21) Application number: 06756831.1
(22) Date of filing: 31.05.2006
(51) Int. Cl.: A23L 1/162

(54) **PROCESS FOR PRODUCING PACKAGED PASTA PRODUCT STORABLE AT ROOM TEMPERATURE**

(30) Priority: 24.04.2006 JP 2006119757
(71) Applicant: Shinwa Kikai Co.Ltd., Satte City Saitama 340-0121 (JP)
(72) Inventor: KAGEYAMA, Genzaburou, Saitama 340-0121 (JP); MASUDA, Toshio, Saitama 340-0121 (JP)
(74) Representative: Khan, Mohammed Saiful Azam
(86) International application number: PCT/JP2006/310911
(87) International publication number: WO 2007/122739

(57) **Abstract**

[PROBLEMS] In producing a packaged pasta product which is storable at room temperature, to provide a pasta product being in the al dente state and having a favourable texture with the use of relatively simple equipments at a relatively low price. [MEANS FOR SOLVING PROBLEMS] A packaged pasta product having a favourable texture is produced via the step (S12) of boiling starting pasta noodles for a definite period of time; the step (S15) of packaging the boiled past in containers for individuals serves the step (S17) of pressurizing and heating the thus packaged pasta with a steam at a high temperature under elevated pressure; the step (S18) of cooking he pressurized and heated pasta until al dente; and the step (S19) of sealing the containers having he pressurised and heated pasta filled therein. The sealing step is preferably conducted in a clean booth.

## Description

### Fiend of Invention

The present invention relates to a process for producing aseptic packaged pasta product storable at room temperature.

### Background Art

The known process for producing packaged pasta product comprises throwing starting dry noodle into a boiling bucket for individual serve and boiling the same over a predetermined period of time therein, transferring the noodle from the boiling bucket into a cooling bucket wherein it is cooled by water (terminating the boiling), removing water while swinging the cooling bucket, optionally adjusting a pH value, packaging the noodle into a pouch or container, incorporating anti-bonding agent (such as oil) for preventing noodles from bonding to each other, closing and sealing the package, sterilizing a product by boiling or in a retort oven, followed by removing water, to produce a pouched or packaged pasta food product, see the following patent documents 1 and 2.
- Patent Document 1:: Japanese Patent (Un-examined) Publication No. Hei 10-271971
- Patent Document 2:: Japanese Patent (Un-examined) Publication No. Hei 07-272629

### Summary of Invention

### Problems to be Solved by Invention

In these prior arts, the boiled noodle is sterilized by boiling or retorting to manufacture a noodle product storable at room temperature. However, the noodle product manufacture by such process has a tendency that the water content in the center and in the peripheral area will become to be substantially equal and starch will be deteriorated, so that it is difficult to provide a pasta product with a favorable taste, which can maintain a state of so-called al dente (having a water content gradient wherein it is relatively solid in the center but soft in the peripheral area).

Accordingly, a problem of the present invention is to provide a process for producing a packaged pasta product storable at room temperature that can maintain an al dente state, with a favorable taste, in relatively simple equipment, at a relatively low price.

### Means for Solving the Problems

To solve this problem, according to claim 1 of the present invention, there is provided a process for producing a packaged pasta product storable at room temperature, comprising the steps of boiling starting pasta noodles for a predetermined period of time; packaging the boiled pasta into a container for every individual serve; hot-pressing the pasta packaged in the container with a steam of high temperature and high pressure; and sealing the container to which the hot-pressed pasta has been contained.

According to claim 2 of the present invention, the process defined in claim 1 is further characterized in that the sealing step is performed in a clean booth.

According to claim 3 of the present invention, the process defined in claim 1 or 2 is further characterized in that the hot-pressing step is performed in such manner that a specific series of steps are repeated by 4-8 times, each series comprising the steps of throwing the container containing the boiled pasta into a closed space between upper and lower chambers, injecting a flush of pressurized steam of 3-8kgf/cm² into the closed space for 5-10 seconds so that the pasta in the container is hot-pressed at high temperature of 130-150 degrees Celsius, and opening the upper and lower chambers.

According to claim 4 of the present invention, the process of any one of claims 1-3 further comprises the step of steaming the pasta while the sealed container containing the pasta is held upside down, and the step of cooling the pasta after the container is turned again upside down to the original orientation.

According to claim 5 of the present invention, the process of any one of claims 1-4 further comprises the step of boiling the hot-pressed pasta until it becomes al dente, said boiling step being followed by the sealing step.

According to claim 6 of the present invention, the process of any one of claim 1-5 is further characterized in that the sealed container is thrown into a retort oven so that the pasta in the container is boiled to an al dente state, which also serves for secondary sterilization.

### Advantages of Invention

In accordance with the present invention, it is possible to provide a process for producing a packaged pasta product storable at room temperature that can maintain an al dente state, with a favorable taste, in relatively simple equipment, at a relatively low price.

The pasta product provided by the present invention has been subjected to hot-press treatment with steam of high temperature and high pressure, and then boiled for secondary sterilization. In addition, the contents will be prevented from contact with the atmosphere by means of oxygen-impermeable container and lid, which prevents secondary contamination. As a result, this pasta product is held in substantially aseptic condition and can be preserved for a long period of time, even at room temperature. Accordingly, a consumer who buys this pasta product will throws the same into an electronic oven for heating over 1-3 minutes so that he or she can readily eat pasta with good taste and relish substantially equal to that of pasta just boiled up. Furthermore, convenient stores and other shops may become free from anxiety about disposition of overstocked products or loss of sale chance resulting from insufficient stock of products.

When the sealing step is performed in a clean booth, the product will become more storable at room temperature.

### Most Preferred Embodiments of Invention

Several embodiments of the present invention will be described in detail in reference to the drawings.

### Embodiment 1

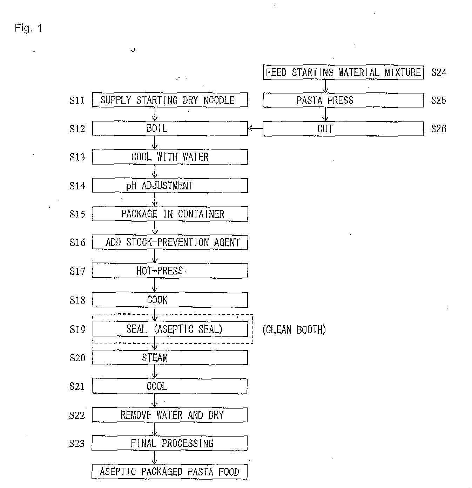

Fig. 1 is a flowchart showing a process of producing aseptic packaged pasta food product in accordance with Embodiment 1 of the present invention. In accordance with this embodiment, it is possible to produce pasta food product that has good taste and is substantially sterilized

Starting dry pasta noodle of a volume of individual serve is supplied to a boiling bucket (S11), and is boiled in the boiling bucket (S12). The boiling period is specified depending thickness of the starting noodle, for example, but should be shorter than the specified period by 10-30%, for example.

The boiled noodle is transferred to a cooling bucket for cooling with water (S13), then subjected to pH adjustment with lactic acid, glucono-delta-lactone or other suitable agent in a temperature adjusting tank of continuous soaking type (S14), and then packaged in a container (S15). Then, an anti-bonding or stock-preventing agent (such as oil, soybean poly-saccharide) is incorporated (S16) for preventing noodles from bonding to each other and allowing the noodles to be easily separated from each other when eating the pasta product.

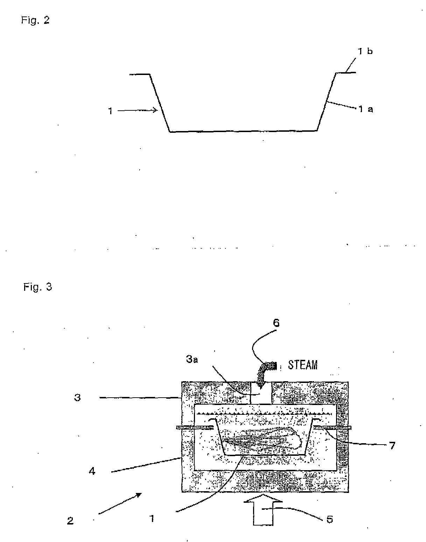

An example of the container is shown in Fig. 2, which is formed in one body into substantially a dish- or tray-like shape from plastic material having heat-resistant property that prevents heat-softening and heat-deformation even when subjected to high temperature of the order of 130-150 degrees Celsius, water-resistant property and oxygen-impermeability that substantially prevents secondary contamination after the container is sealed. The container includes a pasta-receiving body 1a having a volume that is necessary and sufficient for receiving an individual serve of pasta to be served as a pasta product to a consumer, and a flange 1 b extending externally and substantially horizontally from the upper end of the pasta-receiving body 1a. The preferable plastic material of the container 1 will be polypropylene, but it may be a polypropylene sheet to which another sheet of poly-vinylidene chrolide or ethylene vinyl-alcohol copolymer, polyethylene terephthalate (PET), or a layered construction having a core layer of metal foil such as aluminum foil that is interposed between upper and lower polypropylene layers.

Then, after performing the weight check and the weight adjustment upon necessity, hot-press treatment is performed with a hot-press apparatus 2 as shown in Fig. 3, under high temperature and high pressure condition (S17). The hot-press apparatus 2 has an upper chamber 3 with a steam inlet 3a, a lower chamber 4, a drive means 5 for relatively moving and closing the upper and lower chambers 3, 4 to each other to form a closed cavity therebetween, and a steam supply means 6 for supplying steam of a predetermined pressure (of 3-8 kgf/cm², for example) to the closed cavity through the steam inlet 3a. The containers 1 each containing a single serve quantity of the boiled pasta are supported by a container supporting plate 7 (that has a number of openings each adapted to receive the pasta-receiving body 1a of the container 1, said number corresponding to the number of the containers to be supported thereby, said containers being supported with their flanges 1b on edge portions around the openings), so that a predetermined number of the containers are subjected to the hot-press treatment at the same time. A flush of the pressurized steam will increase the inner pressure in the closed cavity between the upper and lower chambers 3, 4, which, in turn, will gradually elevate the steam temperature to 130-150 degrees Celsius, for example. The detailed construction of the hot-press apparatus 2 may be one disclosed in Japanese patent (un-examined) publication No. Hei8-276877.

In the above-described manner, the hot-press treatment is performed by repeating several times a series of steps comprising the mold closing, the steam flush (for 5-10 seconds) and the mold opening. The number of repletion may be adjusted upon the kind and quality of the pasta, but will usually be 4-8 times. The container 1 has not yet been closed and still remains opened at the time when the sterilization is carried out, so that the high temperature/pressure condition in the closed cavity should be directly given to the container 1 and the pasta contained therein. Therefore, when subjected to the hot-press treatment at high temperature condition of 130-150 degrees Celsius over even a short period of time, the container 1 and the pasta therein can be processed effectively, which makes it possible to maintain good taste of the pasta over a long period of time.

After being hot-pressed, the product is subjected to steam-boiling or cooking (S18). The boiling is performed at 95-105 degrees Celsius for 15-40 minutes, for example. By this, the pasta is boiled up to an al dente state, which also contributes to kill or decrease microbes that may possibly be attached to the container 1 and/or the contents therein.

To achieve space-saving, it is preferable that gondolas of multi-row and multi-stair type are used and driven to rotate, in the boiling step. More particularly, the multi-stair gondola has a plurality of plates, each being adopted to carry a number (4-10, for example) of containers 1, 1.... The plates are stacked in parallel in a vertical direction with predetermined interval therebetween to provide a plurality (7, for example) of layers. There are plural (8-70, for example) multi-stair gondolas of such construction, and these multi-stair gondolas are connected at even interval therebetween to a chain conveyor that is driven to rotate on a vertical plane. The plate carrying the containers 1 may be substantially identical to the container supporting plate 7. More particularly, it may have a number of openings each adapted to receive the pasta-receiving body 1a. The number of the openings corresponds to the number of the containers to be supported thereby, wherein each container is placed with their flanges 1 b being supported on edge portions around the openings.

When using such multi-row, multi-stair type gondolas, the containers 1 to which the sterilized pasta has been filled are transferred by a transfer device to the respective stairs of a vacant multi-stair gondola that has been returned to transfer position after moving above the boiling apparatus. After all the stairs of the gondola has received the containers 1, the gondola is moved to a steam room of the boiling apparatus so that the boiling step is performed for a predetermined period of time (15-40 minutes, for example) while it travels in the steam room.

The steam room of the boiling apparatus may be divided into plural zones, and temperature in the respective zones are controlled individually. By this, it becomes possible to provide optimum steam temperature depending upon progression of the boiling step.

The gondola that has been subjected to the boiling step is pulled up by the chain conveyor, and the trays contained therein are transferred to the conveyor stair by stair. The vacant gondola is returned toward the inlet of the boiling apparatus to become ready for the next container-receiving step.

After completing the boiling step, the pasta-containing container is thrown into a sealer where it is sealed by covering with a lid 8 that has been UV-sterilized (S19). The sealer may be any of known heat-sealer, but may optionally be used in combination with a trimmer that trims an unnecessary portion of the sealed lid 8. To prevent deterioration of quality after the container is sealed, the lid 8 should preferably be made from an oxygen-impermeable plastic film that is the same material of the container 1. An easy-peal plastic film such as polyethylene and polypropylene may preferably be used. In a preferable embodiment, the sealing step is conducted after a flush of inactive gas such as nitrogen gas is injected into the container 1 so that air in the container is replaced with the inactive gas. If necessary, an oxygen absorber is incorporated in the sealed container.

Conveyance of the container 1 from the exit of the boiling apparatus to the sealer is effected by a conveyor or something like that. If the container should be exposed to the atmosphere during such conveyance, various bacteria may enter the container to cause secondary contamination. To prevent this, the sealer is installed in a clean booth (or clean room) 9 having cleanliness of the order of class 100-1000, for example. By this, the aseptic condition established by the steam sterilization under high temperature/pressure condition at S17 and the steam-boiling step at S18 may be held at the sealing step, which makes it possible to serve the packaged product as an aseptic one. The construction of the clean booth may have, for example, a tunnel-like booth extending between the exit of the boiling apparatus and the entrance of the sealer, and a clean-air generator is arranged at the upper portion at the middle of the booth to supply clean-air continuously. In a preferable embodiment, the interior of the clean booth is maintained to have a positive pressure (higher than the atmospheric pressure by 0.5-2mmAq, for example) so that the clean air flows from the top to the bottom of the booth, from the center to the periphery thereof, and in a direction opposite to the direction of conveyance (from the sealer to the boiling apparatus) on the conveyor, thereby preventing the contaminated atmosphere to come into the container.

After the pasta-containing container 1 is sealed by the sealer, the sealed container 1 is steamed with hot water in an upside-down orientation (S20), and then returned from the upside-down orientation to the original orientation wherein it is cooled by a coolant such as chiller water (S21). When the sealed container 1 is reversed upside-down before the steaming step, water content in the container becomes uniform between the upside and the downside, which makes it possible to perform the steaming step effectively and uniformly. The purpose of the cooling step is to prevent the smell resulting from the steaming step, which may be performed in such manner that the sealed, pasta-containing container is passed through a coolant tank, for example. The steaming step at S20 and the cooling step at S21 should preferably be performed by employing multi-row, multi-stair gondolas such as those used in the afore-mentioned steam-boiling step at S18 to improve the process efficiency.

After being copied, the reversed container is returned to the original situation and subjected to drying so as to reduce water content to a predetermined percentage (S22). Then, the final processing (S23) including printing the date of production, best-before, etc., pinhole inspection, weight check, etc. that are required for production, so that this can be shipped as an aseptic packaged pasta product 9. A pasta source may be contained in or attached with the product.

The aseptic packaged pasta product produced in the above-described manner has improved preservability because it has been subjected to pH adjustment (S14). Its preservability is also improved by the steam-boiling step (S18) that is carried out after experiencing the hot-press treatment with high temperature and high pressure steam (S17). The region of treatment that may be exposed to the atmosphere during a series of processing steps is blocked from the atmosphere by the clean booth. In addition, the contents are blocked from the atmosphere by the container 1 and the lid 8 both of oxygen-impermeable material, to prevent secondary contamination. Accordingly, this product is held in substantially aseptic condition and can be preserved for a long period of time (for example, from 6 months to 1 year or more), even at room temperature. Accordingly, a consumer who buys this pasta product will throws the same into an electronic oven for heating over 1-3 minutes so that he or she can readily eat pasta with good taste and relish substantially equal to that of pasta just boiled up. Furthermore, convenient stores and other shops may become free from anxiety about disposition of overstocked products or loss of sale chance resulting from insufficient stock of products.

### Embodiment 2

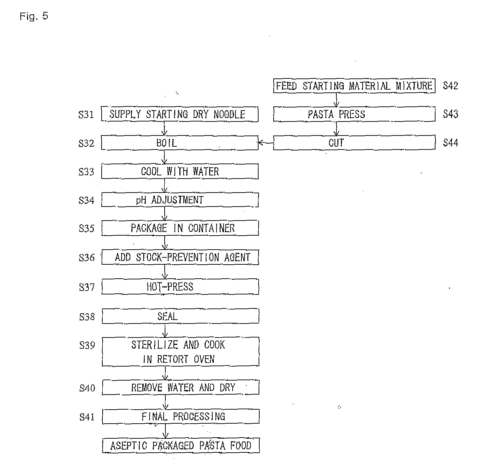

Fig. 5 is a flowchart illustrating a process for producing aseptic packaged pasta food product in accordance with Embodiment 2 of the present invention. In accordance with this embodiment, it is possible to produce pasta food product that has good taste and can be preserved for a practically sufficient long period of time, at room temperature, by using relatively simple and low-cost equipments.

In the flowchart of Fig 5, S1-S37 are substantially identical to S11-S17 of the flowchart of Fig. 1 and, therefore, explanation thereof will be omitted.

In this embodiment, a boiling step in a retort oven (S39) is carried out after a sealing step (S38). Accordingly, after conducting the steam-sterilization under high temperature and high pressure condition at S17, the pasta-containing container is readily transferred to a sealer for sealing (S38). This sealing step may be carried out substantially in the same manner as in S18 of the flowchart of Fig. 1. In this embodiment, however, the next boiling step in the retort oven (S39) may be effective for secondary sterilization, so that it may not be necessary that the sealing step be carried out in a clean booth.

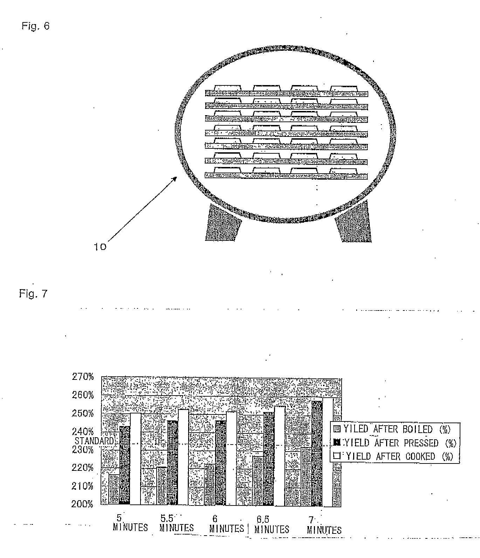

At the boiling step at S39, a retort oven of constant differential pressure type that has been widely used in the conventional sterilizing process can be employed. This can be installed at relatively low cost. When the retort oven has already been equipped, there will be a great deal of cost merit. The retort oven may be a constant differential pressure type retort oven 10 shown in Fig. 6, which may receive a plurality of the sealed, pasta-containing containers 1 on plural racks. The sterilization is carried out for at 100-150 degrees Celsius, for 30-90 minutes at the sterilizing step, followed by cooling to below 40 degrees Celsius at the cooling step.

Then, water-removal and drying step (S40) and the final processing step (S41) are carried out, which are substantially identical to S22 and S23 in the flowchart of Fig. 1 and, therefore, do not need repletion of explanation.

The aseptic packaged pasta product produced in the above-described manner has improved preservability because it has been subjected to pH adjustment (S34). Its preservability is also improved by the boiling step in the retort oven (S39) that is carried out after the sealing step. In addition, the contents are blocked from the atmosphere by the container 1 and the lid 8 both of oxygen-impermeable material, to prevent secondary contamination. Accordingly, this product is held in substantially aseptic condition and can be preserved for a long period of time (for example, from 6 months to 1 year), even at room temperature. Accordingly, a consumer who buys this pasta product will throws the same into an electronic oven for heating over 1-3 minutes so that he or she can readily eat pasta with good taste and relish substantially equal to that of pasta just boiled up. Furthermore, convenient stores and other shops may become free from anxiety about disposition of overstocked products or loss of sale chance resulting from insufficient stock of products. Furthermore, according to this embodiment, a clean booth is not always necessary and a retort oven may be used, which will reduce the investment cost and make good use of the existing equipments.

### Embodiment 3

Although the pasta dry noodle is used as the starting material to be supplied in Embodiment 1 and Embodiment 2 (S11, S31), a step of producing fresh pasta may be added. More specifically, as shown in the flowcharts of Fig. 1 and Fig. 5, pasta material is supplied (S24, S42), it is supplied to a pasta press to produce noodle (S25, S43), this is cut by a predetermined length (S26, S44), and then boiled (S12, S32).

The treatment other than the above may be carried out in the same manner as those described in Embodiment 1 and Embodiment 2, which do not need repletion of their explanation.

### Embodiment 4

Tests were conducted to examine relationship between the boiling period (S12) and the hot-press step (S17) and the steam-boiling step (S18) in Embodiment 1. As the starting noodle at S11 was used "MA-MA" (registered trademark) 1.6mm noodle (0.7g per noodle in dry weight, standard boiling period of 7 minutes), which was boiled for periods of 5-7.5 minutes (at every 0.5 minute) (S12) and subjected to the hot-press by the steam flash at 140 degrees Celsius for 5.5 seconds (S18), which was repeated four times, followed by the steam-boiling for 15 minutes (S18). In these tests, the weights of the noodle after boiled, after hot-pressed and after steam-boiled were measured to estimate the yield. The results are shown in a graph of Fig. 7.

As shown in this graph, the yield after the noodle was boiled for the standard boiling period (7 minutes) of the pasta dry noodle was 232.6%. By comparison, when the boiled noodle was then subjected to the hot-press and the steam-boiling steps in accordance with the present invention, even when the boiling period was shortened to 5 minutes, it is confirmed that a yield much greater than that obtainable after the boiling for the standard boiling period could be obtained. However, when the boiling period was shorter than 6 minutes, the noodle quality becomes stiff like rubber and will be difficult to be packed in the container (S15). Therefore, it is preferable to boil the noodle for at least 6.5 minutes or around.

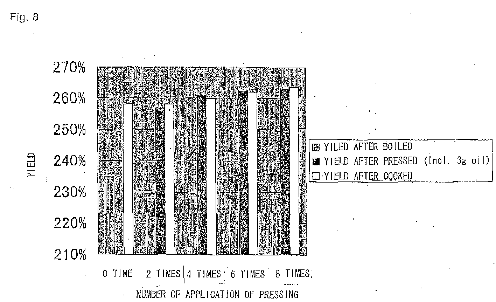

Next, tests were conducted to examine relationship between the pressing time in the hot-press step (S17) and the yield. As the starting noodle at S11 was used "DE-CECCO"(registered trademark) 1.6mm noodle. In one sampe, the starting noodle was boiled for 7 minutes (S12), which was not subjected to the hot-press (S17) (the pressing time is zero). In other samples, the starting noodle was boiled for 6.5 minutes (S12) and then subjected to the hot-press treatment with steam flush at 140 degrees Celsius for 5.5 seconds, which were repeated two times, four times, six times and eight times. These non-hot-pressed and hot-pressed samples were steam-boiled for 15 minutes (S18), left as they were for 1.5 minutes, and sealed (S19). In these tests, the weights of the noodle after boiled, after hot-pressed and after steam-boiled were measured to estimate the yield. The results are shown in a graph of Fig. 8.

As shown in this graph, even when the boiling period was reduced to 6.5 minutes that is shorter than the standard boiling period, it is confirmed that a yield after subjected to the pressure and the steam-boiling was drastically improved by conducting the pressing step 2-8 times in the hot-press treatment, when compared with the case wherein the boiling step was carried out over the standard boiling period of 7 minutes but the product was not subjected to the hot-press treatment.

Furthermore, these product samples were tasted and appreciated after 2-day preservation at room temperature and after 2-week preservation in a refrigerator. The samples that were not subjected to the hot-press treatment have no favorable noodle elasticity and would be snapped off at every chew, whereas the hot-pressed samples have suitable stiffness and elasticity, providing favorable noodle taste. However, there could be seen a tendency that the samples that were subjected to the pressing twice would be too soft especially immediately after the production. The stiffness should be gradually increased with the number of the pressing steps to be applied, but would be maximized when subjected to the pressing steps eight times. Accordingly, it has been found that the favorable number of the pressing steps to be applied should be 4-8 times.

### Brief Description of Drawings

Fig. 1 is a flowchart showing a process of producing aseptic packaged pasta food product in accordance with an embodiment of the present invention.
Fig. 2 is a cross-section showing an example of a container that can be used in this aseptic packaged pasta food product.
Fig. 3 is an explanatory view showing hot-press treatment in this production process and a hot-press apparatus for use in the hot-press treatment.

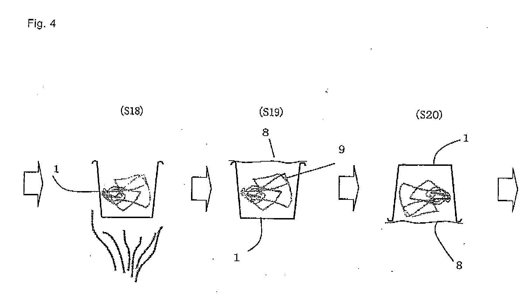

Fig. 4 is an explanatory view showing the situation (up-side down) of the container when it is processed at the respective steps of boiling, sealing and steam-boiling in this production process.
Fig. 5 is a flowchart showing a process of producing aseptic packaged pasta food product in accordance with another embodiment of the present invention.
Fig. 6 is an explanatory view showing a steam-boiling step in this production process and a retort oven for used in this step.
Fig. 7 is a graph showing relationship between the boiling period and the yield.
Fig. 8 is a graph showing relationship between the number of application of the pressing step and the yield.

### Legends

- 1: Container
- 1a: Pasta-receiving body
- 1b: Flange
- 2: Sterilizer
- 3: Upper chamber
- 4: Lower chamber
- 5: Drive means
- 6: Steam supply means
- 7: Container supporting plate
- 8: Lid
- 9: Inactive gas
- 10: Retort oven

## Claims

1. A process for producing a packaged pasta product storable at room temperature, comprising the steps of boiling starting pasta noodles for a predetermined period of time; packaging the boiled pasta into a container for every individual serve; hot-pressing the pasta packaged in the container with a steam of high temperature and high pressure; and sealing the container to which the hot-pressed pasta has been contained.

2. A process according to claim 1 wherein said sealing step is performed in a clean booth.

3. A process according to claim 1 or 2 wherein said hot-pressing step is performed in such manner that a specific series of steps are repeated by 4-8 times, each series comprising the steps of throwing the container containing the boiled pasta into a closed space between upper and lower chambers, injecting a flush of pressurized steam of 3-8kgf/cm² into the closed space for 5-10 seconds so that the pasta in the container is hot-pressed at high temperature of 130-150 degrees Celsius, and opening the upper and lower chambers.

4. A process according to any one of claims 1-3 which further comprises the step of steaming the pasta while the sealed container containing the pasta is held upside down, and the step of cooling the pasta after the container is turned again upside down to the original orientation.

5. A process according to any one of claims 1-4 which further comprises the step of boiling the hot-pressed pasta until it becomes al dente, said boiling step being followed by the sealing step.

6. A process according to any one of claim 1-5 which further **characterized in that** the sealed container is thrown into a retort oven so that the pasta in the container is boiled to an al dente state, which also serves for secondary sterilization.
